# EUROPÄISCHE PATENTSCHRIFT

(11) **EP 3 627 149 B1**
(45) Veröffentlichungstag und Bekanntmachung des Hinweises auf die Patenterteilung: **17.03.2021**
(21) Anmeldenummer: 18196060.0
(22) Anmeldetag: 21.09.2018
(51) Int. Cl.: G01N 30/06, G01N 1/40

(54) **KONDITIONIERUNG EINES ADSORBENS**
CONDITIONING OF AN ADSORBENT
CONDITIONNEMENT D'UN ADSORBANT

(43) Veröffentlichungstag der Anmeldung: 25.03.2020
(73) Patentinhaber: CTC Analytics AG, 4222 Zwingen (CH)
(72) Erfinder: Schilling, Beat, 8038 Zürich (CH); Cretnik, Stefan, 4143 Dornach (CH); Chiew Mei Chong, Singapore 117610 (SG)
(74) Vertreter: Keller Schneider Patent- und Markenanwälte AG (Bern)

(56) Entgegenhaltungen:
- WO-A1-00/17429
- GB-A- 2 392 114
- US-B2- 7 047 661

## Beschreibung

### Technisches Gebiet

Die Erfindung betrifft ein Verfahren zur thermischen Desorption eines Phasenmaterials, insbesondere zur Konditionierung einer Fiber zur Durchführung einer Festphasen-Mikroextraktion, wobei das Adsorbens entlang einer Temperaturkurve beheizt wird. Weiter betrifft die Erfindung eine zugehörige Vorrichtung.

### Stand der Technik

Bei chemischen Analysen werden häufig Adsorbens eingesetzt, welche den zu untersuchenden Stoff adsorbieren. Solche Adsorbens werden zum Beispiel bei Solid Phase Extraction (SPE), bei Solid Phase Microextraction (SPME), aber auch bei Chromatographie Säulen, wie zum Beispiel bei HPLC (Hochdruck-Flüssigchromatograph) oder GC (Gaschromatograph) eingesetzt.

Bei der SPME oder SPE wird mit dem Adsorbens ein Analyt aus einer Gasphase oder einer flüssigen Phase adsorbiert. Anschliessend wird der Analyt - meist thermisch - für die Analyse wieder freigesetzt. Dies erfolgt zum Beispiel in einem Injection Port eines HPLC oder eines GC.

Das Phasenmaterial respektive das Adsorbens ist zum Beispiel bei SPME als Phasenmaterial einer Fiber, als Festphase einer Chromatographiesäule oder als sonstige Festphase für die Analytanreicherung, Filtration oder Chromatographie ausgebildet. Das Phasenmaterial umfasst vorzugsweise (nicht abschliessend) Polyacrylat, Carbowax, Polydivinylbenzol, Carboxen, PDMS, Polydimethylsiloxan oder Mischungen respektive Derivate davon, insbesondere bekannte Materialien der Trennsäulen aus dem Bereich der Chromatographie, insbesondere aus dem Bereich der Gas- oder Flüssigchromatographie (GC, LC).

In der Verwendung wird die SPME einem Analyten ausgesetzt, so dass dieser durch das Phasenmaterial der Fiber adsorbiert wird. Anschliessend wird die Fiber in einem Injection Port eines Analysengerätes desorbiert. Die Fiber wird danach für die weitere Verwendung konditioniert, das heisst, der in dem Phasenmaterial der Fiber verbliebene Analyt wird vollständig desorbiert, um die Fiber wieder in einen einsatzfähigen Zustand zu versetzen.

Die benötigte Zeitdauer zur vollständigen Desorption des Analyten aus dem Phasenmaterial hängt dabei unter anderem von dem Analyten, der Schichtdicke des Phasenmaterials und der Desorptionstemperatur ab.

Für die Konditionierung des Phasenmaterials, respektive der Fiber sind unterschiedliche Techniken bekannt.

Die US 9,212,979 B2 (King Fahd University of Petroleum and Minerals) offenbart ein automatisiertes Headspace SPME-Verfahren, welches mit einem Gaschromatographen / Massenspektrometer gekoppelt ist. Die SPME-Fiber wird dazu in einen Injektionport eines Gaschromatographen eingeführt. Nach der Desorption wird die SPME-Fiber gereinigt, indem der Injektionport für 2 - 10 min bei einer Temperatur zwischen 200 - 350°C, vorzugsweise für 5 Minuten bei einer Temperatur von 250 °C beheizt wird.

Die US 7,047,661 B2 (The Regents of the University of California) offenbart eine Vorrichtung und ein Verfahren zum Reinigen und Konditionieren einer SPME-Fiber ohne die Verwendung eines Gaschromatographen, da diese hinsichtlich Verschleppung und Kreuzkontamination problematisch sind. Die Vorrichtung umfasst eine längliche Kammer mit einem ersten Ende, in welchem die SPME-Fiber aufgenommen wird und einem gegenüberliegenden Ende mit einem Fluid-Ausgang, sowie einer Heizung und Mittel zum Durchströmen der Kammer vom ersten zum zweiten Ende mit einem Fluid. Die Ausbildung der Konditionierungseinrichtung als separate Einheit hat den Vorteil, dass gegenüber dem Injektor des Analysengeräts andere Temperaturen gewählt werden können.

Die WO00/17429 (University South Florida) offenbart ein Herstellungsverfahren für eine Fiber, wobei die Fiber einem thermischen Zyklus ausgesetzt wird.

Das von CTC Analytics AG vertriebene SPME Fiber Conditioning Module wird je nach Schichtdicke der stationären Phase auf der Fiber bei einer Temperatur zwischen 200°C und 340 °C betrieben. Die Fiber wird im Modul während rund 30 Minuten auf dieser Temperatur konditioniert.

Die bekannten Techniken zur Konditionierung einer Fiber für SPME haben den Nachteil, dass die Fiber relativ rasch unbrauchbar wird. So wurde festgestellt, dass die Fiber durch die starke Erhitzung spröde wird respektive verglast und somit die Fiber je nach Schichtdicke des Phasenmaterials und des Durchmessers der Fiber bereits nach relativ wenigen Anwendungen, zum Beispiel 30 - 35 Anwendungen und jeweiliger Konditionierung bei 280°C für 20 Minuten nicht mehr verwendet werden kann, da die Adsorptionseigenschaften zu stark beeinträchtigt sind.

### Darstellung der Erfindung

Aufgabe der Erfindung ist es, ein dem eingangs genannten technischen Gebiet zugehörendes Verfahren zur Konditionierung von Phasenmaterial, insbesondere einer Fiber für die SPME zu schaffen, mit welchem die Lebensdauer des Phasenmaterials, insbesondere der Fiber, gegenüber den bekannten Verfahren erhöht werden kann.

Die Lösung der Aufgabe ist durch die Merkmale des Anspruchs 1 definiert. Gemäss der Erfindung weist die Temperaturkurve des Phasenmaterials während der Desorption mindestens einen Tiefpunkt auf.

Dadurch, dass die Temperaturkurve des Phasenmaterials während der Desorption mindestens einen Tiefpunkt aufweist, wird das Konditionierverfahren schonend für das Phasenmaterial. Durch den zwischenzeitlichen Temperaturabfall zum Tiefpunkt der Temperaturkurve wird der Alterungsprozess respektive die Verglasung und Versprödung des Phasenmaterials signifikant verringert. Dies kann unter anderem darauf zurückgeführt werden, dass zur Verglasung das Phasenmaterial eine gewisse Zeitdauer über einer kritischen Temperatur gehalten werden muss, da aufgrund der hohen Viskosität die Verglasung relativ langsam eintritt. Somit tritt bei einem Unterbruch respektive einer Verkürzung dieser Zeitdauer kaum respektive weitaus weniger ausgeprägte Verglasung ein.

Dadurch, dass die Konditionierung effizienter durchgeführt werden kann, kann zudem die maximale Temperatur gegenüber herkömmlichen Verfahren tiefer eingestellt werden, womit die Fiber, insbesondere das Phasenmaterial schonender konditioniert werden kann. Damit kann die Lebensdauer der Fiber weiter erhöht werden.

Anderseits konnte gezeigt werden, dass die Tiefpunkte in der Temperaturkurve für die Desorption kaum zu einer Beeinträchtigung der Effizienz des Verfahrens führen. Je nach Typ des Phasenmaterials respektive des Analyten und der Konditionierungstemperatur konnte gezeigt werden, dass die Gesamtdauer der Konditionierung sogar verringert werden kann, ohne dass Einbussen bei der Qualität der Konditionierung in Kauf genommen werden müssen. Das heisst, die Verschleppung von Analyten kann mit dem vorliegenden Verfahren bei kürzerer Gesamtdauer sehr gering gehalten werden.

Versuche haben gezeigt, dass die Lebensdauer des Phasenmaterials respektive der Fiber durch das schonende Verfahren bis zu fünfmal verlängert werden kann. Somit kann eine Fiber, welche bei Konditionierungsbedingungen von 280 °C für 20 Minuten nur für rund 30 Zyklen verwendet werden kann, nun für bis zu 150 Zyklen verwendet werden.

Soweit nicht anders beschrieben, handelt es sich bei den erwähnten Temperaturen jeweils um eine Temperatur in der Kammer, in welcher das Phasenmaterial respektive die Fiber für die Konditionierung eingesetzt wird.

Das Phasenmaterial umfasst vorzugsweise ein Sorbat, welche ein Sorbens im Sinne der gängigen Sorptionsisothermen sorbieren können (zum Beispiel nach Zeldowitsch, Freundlich, Langmuir oder BET-Modellen). Das Phasenmaterial ist vorzugsweise durch eine Fiber, insbesondere eine Fiber für die SPME umfasst. Das Phasenmaterial kann aber auch durch eine Chromatographiesäule oder dergleichen umfasst sein. Die Fiber ist bevorzugt in eine Kanüle ein- und ausfahrbar so dass die Fiber geschützt werden kann, wenn sie nicht eingesetzt wird. Die Kanüle weist dazu einen geringfügig grösseren Innendurchmesser auf, als die Fiber einen Aussendurchmesser aufweist. Der Durchmesser einer Fiber inklusive dem Phasenmaterial kann zum Beispiel zwischen 0.1 mm und 10 mm liegen. In bevorzugten Ausführungsformen weist die Fiber einen Aussendurchmesser von 0.2 mm bis 1.2 mm auf und die Kanüle weist entsprechend einen Aussendurchmesser von rund 0.6 mm bis 1.6 mm auf. In weiteren bevorzugten Ausführungsformen weist die Fiber einen Durchmesser von mehr als 1.6 mm auf, wobei insbesondere bei grösseren Durchmesser der Fiber auf die Kanüle verzichtet werden kann.

Dem Fachmann ist jedoch klar, dass die Fiber und/oder die Kanüle auch anderweitig dimensioniert sein können. Die Fiber kann im Bereich des Phasenmaterials eine Oberfläche von ungefähr 5 mm² bis 100 mm² aufweisen. Die Oberfläche kann auch kleiner oder grösser gewählt sein. Auf die Kanüle kann generell auch verzichtet werden.

Das Phasenmaterial, insbesondere die Fiber, muss nicht zwingend kreiszylindrisch ausgebildet sein, sondern kann auch einen polygonalen oder anderweitige Querschnitte aufweisen. Der Querschnitt kann zum Beispiel dreieckig, oval, rechteckig, sechseckig etc. ausgebildet sein. Die Polygone müssen nicht regelmässig sein, so kann das Dreieck zum Beispiel einen rechten Winkel oder das Sechseck zwei längere, parallel Seiten umfassen. Bei einer Ausführungsform mit rechteckigem Querschnitt kann das Seitenverhältnis grundsätzlich beliebig ausgebildet sein, insbesondere kann das Phasenmaterial, zum Beispiel die Fiber, auch plattenförmig, insbesondere als sogenannte Coated SPME Blade ausgebildet sein. Das Phasenmaterial, insbesondere die Fiber, kann für den Einsatz in einem Gaschromatographen, einem Flussigchromatographen oder anderen Analysengeräten ausgebildet sein.

Unter dem Begriff Desorption wird das Austreten des Analyten aus dem Phasenmaterial verstanden. Das Phasenmaterial respektive Adsorptionsmittel liegt bei der Fiber als Beschichtung vor. Diese kann unterschiedliche Schichtdicken aufweisen, z.B. zwischen 1 und 500 Mikrometer, vorzugsweise zwischen 7 und 250 Mikrometer. Versuche haben gezeigt, dass das Verfahren zur Desorption gegenüber herkömmlichen Verfahren bei grösseren Schichtdicken besonders zu bevorzugen ist. Das Phasenmaterial umfasst vorzugsweise einen oder mehrere der folgenden Stoffe: Polyacrylat, Carbowax, Polydivinylbenzol, Carboxen, PDMS, Polydimethylsiloxan, Silicagel, Aktivkohle oder nanoporöse Materialien.

Unter dem Begriff der Konditionierung wird ein Verfahren verstanden, bei welchem das Phasenmaterial, insbesondere die Fiber, zur Wiederverwendung gereinigt wird. Dazu werden Reste des Analyten und allenfalls weiterer Stoffe, wie Lösemittel und dergleichen durch Erhitzen des Phasenmaterials desorbiert.

Unter dem Begriff der Temperaturkurve wird ein Verlauf der Temperatur verstanden, welche im Konditionierraum während des Konditionierverfahrens herrscht. Die Temperaturkurve wird nachfolgend als ebene Kurve visualisiert, wobei die X-Achse respektive die Abszisse die Zeit und die Y-Achse respektive die Ordinatenachse die Temperatur ist. Der Tiefpunkt stellt dabei ein lokales Minimum der Temperaturkurve dar.

In der bevorzugten Ausführungsform betrifft das Verfahren die Konditionierung einer Fiber zur Durchführung einer Festphasen-Mikroextraktion (SPME respektive Solid Phase Micro Extraction). Dem Fachmann ist jedoch klar, dass das Verfahren zur Konditionierung auch für andere thermische Konditionierungsmethoden eingesetzt werden kann, insbesondere könnte mit derselben Technik auch eine HPLC oder GC-Säule konditioniert werden.

Vorzugsweise liegt eine Temperaturdifferenz zwischen einer maximalen Temperatur der Temperaturkurve und des Tiefpunkt der Temperaturkurve zwischen 50°C und 500°C, vorzugsweise zwischen 100°C und 400 °C, insbesondere bevorzugt zwischen 150°C und 350 °C. Die Temperaturdifferenz ist vorzugsweise derart gewählt, dass die auf den Tiefpunkt folgende Heizphase das Phasenmaterial nicht zu stark beansprucht, sondern lediglich den Analyten respektive die am Phasenmaterial adsorbierten Stoffe desorbieren kann.

In Varianten kann die Temperaturdifferenz auch kleiner als 50°C oder grösser als 500°C sein.

Bevorzugt liegt die maximale Temperatur zwischen 100°C und 600 °C, vorzugsweise zwischen 150°C und 400 °C, insbesondere bevorzugt zwischen 200°C und 300 °C. Besonders bevorzugt liegt die maximale Temperatur zwischen 250 °C und 300 °C, insbesondere bei rund 280 °C. Versuche haben gezeigt, dass insbesondere bei einer Konditionierung von Fiber für SPME diese Temperatur zur schonenden aber dennoch effizienten Konditionierung bevorzugt ist. Grundsätzlich ist die Konditionierung des Phasenmaterials, insbesondere der Fiber bei tieferen Temperaturen schonender.

In Varianten kann die maximale Temperatur auch unter 100 °C oder übe 600 °C liegen.

Vorzugswiese liegt der Tiefpunkt zwischen 0 °C und 300 °C, vorzugsweise zwischen 10 °C und 150 °C, insbesondere bevorzugt zwischen 15 °C und 50 °C. In einer bevorzugten Ausführungsform liegt der Tiefpunkt bei ungefähr Raumtemperatur, das heisst bei ungefähr 18 °C bis 28 °C. Insbesondere ohne aktive Kühlung kann bei einer Wahl des Tiefpunkts klar über Raumtemperatur ein effizientes Verfahren erreicht werden.

In Varianten kann der Tiefpunkt auch unter 0°C liegen, insbesondere wenn eine aktive Kühlung vorgesehen ist.

Bevorzugt umfasst die Temperaturkurve mehr als einen Tiefpunkt, insbesondere zwischen 2 und 10 Tiefpunkte, vorzugsweise zwischen 4 und 8 Tiefpunkte. Durch die mehreren Tiefpunkte kann die Effizienz des Konditionierungsverfahrens erhöht werden und damit die Analytverschleppung bei nachfolgenden Analysen reduziert werden. Je grösser die Anzahl Tiefpunkte gewählt wird, desto effizienter kann das Konditionierungsverfahren durchgeführt werden.

In Varianten, insbesondere je nach Anforderungen an die Fiber und die Messungen kann ein einziger Tiefpunkt auch ausreichen.

Vorzugsweise wird zwischen zwei Tiefpunkten jeweils ein Hochpunkt erreicht, welcher grösser als 0.8-mal, vorzugsweise grösser als 0.9-mal die maximale Temperatur ist. Besonders bevorzugt wird zwischen zwei Tiefpunkten jeweils ein Hochpunkt mit im Wesentlichen der maximalen Temperatur erreicht.

In Varianten kann die Temperaturkurve zwischen zwei Tiefpunkten auch ein lokales Maximum aufweisen, welches kleiner als 0.8-mal die maximale Temperatur ist. Zum Beispiel können aufeinanderfolgende lokale Maxima kontinuierlich ansteigen oder andere Verhalten aufweisen. So kann zum Beispiel ein Fluid vorgesehen sein, welches die Kammer während der Konditionierung kontinuierlich spült. Das aus der Kammer austretende Fluid kann kontinuierlich analysiert werden (z.B. Spektrometrisch oder dergleichen), um die Temperaturkurve anhand des Analysenresultates dynamisch anzupassen und damit das Konditionierungsverfahren zu optimieren.

Bevorzugt liegt zwischen zwei zeitlich benachbarten Tiefpunkten eine Zeitspanne zwischen 15 und 600 Sekunden, vorzugsweise zwischen 30 und 300 Sekunden, besonders bevorzugt zwischen 60 und 240 Sekunden. Typischerweise setzt sich die Zeitspanne zwischen zwei benachbarten Tiefpunkten aus einer Heizphase und einer Kühlphase zusammen - wobei während der Kühlphase aktiv oder passiv gekühlt werden kann. Dabei kann die Heizphase zwischen 30 % und 80 %, insbesondere zwischen 50 % und 70 %, besonders bevorzugt zwischen 55 % und 65% der Zeitspanne umfassen. Besonders bevorzugt beträgt die Heizphase rund 1 bis 1.5 Minuten, während die Kühlphase rund 1 Minute dauert.

In Varianten kann die Zeitspanne zwischen zwei zeitlich benachbarten Tiefpunkten auch kleiner als 15 Sekunden respektive grösser als 600 Sekunden sein.

Eine Vorrichtung zur Durchführung des Verfahrens umfasst vorzugsweise eine Kammer zur Aufnahme der Fiber sowie eine Heizeinrichtung zum Beheizen der Kammer. Die Heizeinrichtung umfasst vorzugsweise ein oder mehrere elektrische Heizelemente innerhalb der Kammer. Die Kammer umfasst vorzugsweise einen Fluidein- und Fluidauslass, so dass die Kammer mit einem Fluid, insbesondere einem Gas gespült werden kann. Im Betrieb wird die Kammer vorzugsweise mit einem Inertgas, insbesondere mit Stickstoff oder einem Edelgas gespült. Die Heizeinrichtung kann auch derart ausgebildet sein, dass damit der Gasstrom beheizt wird, womit zusätzlich oder alternativ zu den Heizelementen die Fiber beheizt werden kann. Alternativ kann auf den Fluidein- und Fluidauslass auch verzichtet werden. Der Fluideinlass ist vorzugsweise in einem Bereich der Kammer angeordnet, in welchem bei eingesetzter Fiber sich die Spitze der Fiber befindet, so dass das Fluid von der Fiberspitze her durch die Kammer geführt sein kann. In diesem Fall liegt der Fluidauslass vorzugsweise bei eingesetzter Fiber an einem der Spitze der Fiber gegenüberliegendem Ende. Alternativ können der Fluidein- und Fluidauslass auch vertauscht sein, so dass sich der Fluidauslass bei der Fiberspitze befindet. Die Heizung kann als elektrische Heizung vorliegen, welche auf eine konstante Temperatur geregelt ist. Damit kann eine besonders kostengünstige Heizung bereitgestellt werden. In Varianten kann die Leistung der Heizung konstant gehalten sein. Die Kammer kann als spezifisch für die Konditionierung ausgebildet sein, womit eine Eintrittsöffnung für die Fiber offen ist, das heisst, die Eintrittsöffnung umfasst kein Septum. Damit wird eine wartungsarme Vorrichtung zur Konditionierung einer Fiber geschaffen. Alternativ kann ein beheizbarer Injektionsport eines Analysengeräts, insbesondere eines Gaschromatographen oder Flüssigchromatographen für die Konditionierung vorgesehen sein. Die Vorrichtung zur Durchführung der Konditionierung kann wahlweise eine zweite Kammer umfassen, welche als Kühlkammer ausgebildet ist und zum Beispiel auf Raumtemperatur gehalten und mit Inertgas durchspült ist. Die Kühlkammer kann aber auch aktiv gekühlt sein, z.B. auf 0 °C oder tiefer.

Im Verfahren zur Konditionierung der Fiber wird die Fiber in die Kammer eingesetzt. Die Kammer kann entweder beim Einsetzten der Fiber bereits aufgeheizt sein, oder aber die Kammer wird nach dem Einsetzten der Fiber aufgeheizt. Nach dem Aufheizvorgang wird das erste lokale Maximum der Temperaturkurve erreicht. Nach einer vorgegebenen Zeitspanne, zum Beispiel nach 1 Minute, wird in einer bevorzugten Ausführungsform die Fiber aus der Kammer entnommen, um diese abzukühlen. Damit kann ein besonders schnelles Abkühlen der Fiber erreicht werden, während die Temperatur in der Kammer gehalten werden kann.

Der Abkühlvorgang ausserhalb der Kammer kann in einer Kühlkammer oder an der Umgebungsluft erfolgen. Zur Unterstützung des Kühlvorgangs kann sowohl in der Kühlkammer als auch in der Varianten an der Umgebungsluft ein Ventilator vorgesehen sein. Die Kühlkammer weist dabei eine Temperatur auf, welche geringer ist als die maximale Temperatur der Kammer.

Alternativ kann die Fiber während des Abkühlvorgangs in der Kammer verbleiben, wobei die Heizung abgestellt wird, so dass sich die Kammer und damit die Fiber abkühlen. Insbesondere bei einer Beheizung mit elektrischen Heizelementen in der Kammer ist der Abkühlvorgang jedoch relativ langsam. In einem weiteren Verfahren kann die Heizung auch lediglich mit reduzierter Leistung weiter betrieben werden.

Die Kammer kann in Varianten auch aktiv gekühlt werden. Dies ist insbesondere bei Kammern oder Phasenmaterialien mit grosser spezifischen Wärmekapazität und/oder Masse von Vorteil sein, da damit der Abkühlvorgang beschleunigt werden kann. Insbesondere bei Chromatographiesäulen, zum Beispiel bei HPLC oder GC kann dies von grossem Vorteil sein. Das Abkühlen kann zum Beispiel mit einem Fluid, insbesondere zum Beispiel mit Stickstoff oder dergleichen erfolgen. Sofern die Kammer zum Durchspülen eines Fluides vorgesehen ist, kann für den Abkühlvorgang zum Beispiel lediglich der Volumenstrom des Fluides erhöht werden. Weiter kann der Abkühlvorgang auch mit einem Kühlelement, zum Beispiel einem Piezo-Kühlelement oder dergleichen erfolgen. Statt die Kammer direkt zu kühlen kann auch lediglich das Heizelement abgekühlt werden.

In einer weiteren Variante kann die Kammer mit einem heissen Gasstrom beheizt und anschliessend mit einem kühlen Gasstrom gekühlt werden. In dieser Variante ist die Kammer vorzugsweise derart beschaffen, dass die Innenwand der Kammer eine möglichst geringe Wärmeleitfähigkeit respektive Wärmekapazität aufweist.

In einem besonders bevorzugten Verfahren wird die Fiber in die vorgeheizte Kammer eingeführt und aufgeheizt. Danach wird die Fiber aus der Kammer geführt, um diese abzukühlen. Das Abkühlen erfolgt vorzugsweise ausserhalb der Kammer vorzugsweise durch die Raumluft. Vorzugsweise wird die Fiber dazu in eine Kanüle eingeführt, so dass die Fiber während des Abkühlvorgangs nicht durch die Raumluft kontaminiert wird. Nach dem Abkühlvorgang wird die Fiber in der Kammer erneut exponiert und aufgeheizt. Die Kammer weist währen des gesamten Verfahrens eine konstante Temperatur auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig.1: eine erste Ausführungsform einer Temperaturkurve für das Konditionierungsverfahren;
- Fig.2: eine zweite Ausführungsform einer Temperaturkurve für das Konditionierungsverfahren;
- Fig.3: eine dritte Ausführungsform einer Temperaturkurve für das Konditionierungsverfahren;
- Fig.4: eine vierte Ausführungsform einer Temperaturkurve für das Konditionierungsverfahren;
- Fig.5: eine vierte Ausführungsform einer Temperaturkurve für das Konditionierungsverfahren; und
- Fig. 6: eine schematische Darstellung einer Vorrichtung zur Durchführung einer Konditionierung einer Fiber für SPME.

Grundsätzlich sind in den Figuren gleiche Teile mit gleichen Bezugszeichen versehen.

### Wege zur Ausführung der Erfindung

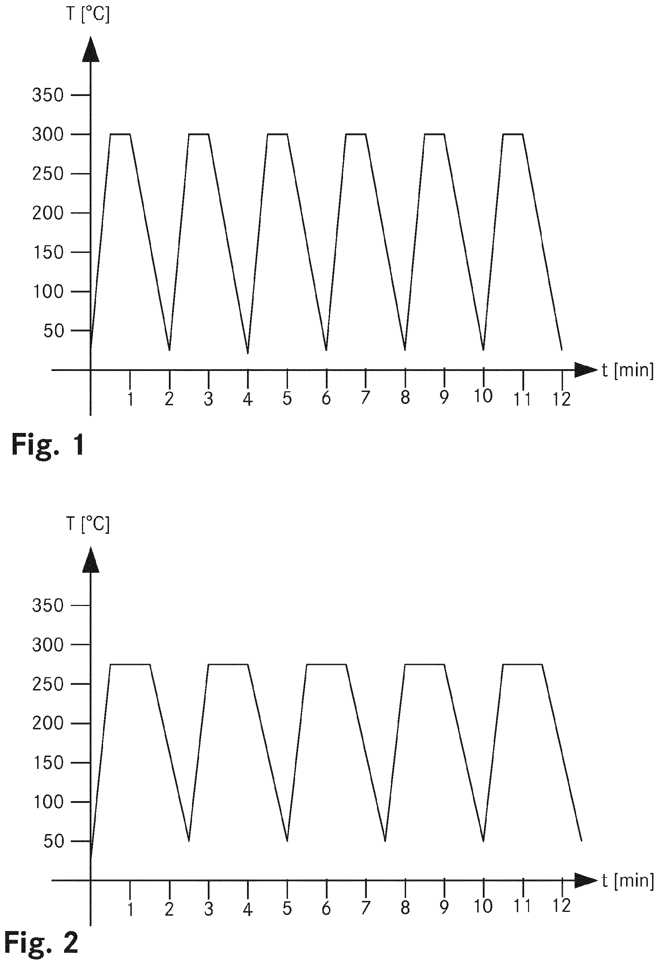

In den nachfolgenden Figuren 1 bis 5 sind verschiedene Ausführungsformen einer Temperaturkurve dargestellt. Die Temperaturkurve widerspiegelt dabei die Temperatur des Phasenmaterials. Insbesondere die Temperaturanstiege sind jeweils abhängig von einer Heizleistung der Kammer und der Schichtdicke des Phasenmaterials, so dass die Steigung in diesen Bereichen bedeutend grösser, aber auch kleiner sein kann. Ebenso können die Steigungen in den Kühlphasen abhängig von der Art der Kühlung und der Schichtdicke des Phasenmaterials grösser oder kleiner sein. Die Temperaturkurven sollen insbesondere auch einen qualitativen Blick auf des Verfahrens ermöglichen, während die minimalen und maximalen Temperaturen, sowie die Steigungen der Temperaturkurven und die Haltezeiten der Temperaturen in den Temperaturkurven nicht auf die Beispiele einzuschränken sind.

Die Figur 1 zeigt eine erste Ausführungsform einer Temperaturkurve für das Konditionierungsverfahren eines Phasenmaterials in einer Kammer. Die Kammer ist mit der Heizvorrichtung auf konstante 300 °C aufgeheizt. Die Temperatur der Kammer bleibt über das gesamte Konditionierverfahren konstant. Zum Zeitpunkt 0 wird die Fiber in der Kammer exponiert und damit während 60 Sekunden aufgeheizt. Anschliessend wird die Fiber aus der Kammer entnommen und an der Umgebungsluft abgekühlt. Die Endtemperatur nach dem Abkühlvorgang liegt ungefähr bei Raumtemperatur, vorliegend bei rund 25 °C. Der Kühlvorgang dauert 60 Sekunden. Anschliessend wird die Fiber wieder in der Kammer bei der Temperatur von 300 °C für 60 Sekunden exponiert, womit sich die Temperatur der Fiber von der Raumtemperatur auf 300°C erhöht und bei 300 °C gehalten wird. Diese Schritte werden widerholt bis sechsmal die Temperatur von 300 °C erreicht wurde. Der Prozess endet nach dem letzten Abkühlvorgang.

In dieser ersten Ausführungsform weist die Temperaturkurve fünf lokale Minima respektive fünf Tiefpunkte bei einer Temperatur von ungefähr 25 °C auf. Die Maximale Temperatur sowie die lokalen Maxima liegen jeweils bei einer Temperatur von 300 °C. Der Gesamtzyklus dauert damit rund 12 Minuten.

Die Figur 2 zeigt eine zweite Ausführungsform einer Temperaturkurve für das Konditionierungsverfahren eines Adsorbens in einer Kammer. Die Kammer ist mit der Heizvorrichtung auf konstante 250 °C aufgeheizt. Die Fiber wird während 90 Sekunden in der Kammer aufgeheizt und erreicht eine maximale Temperatur von 250 °C. Anschliessend wird die Heizvorrichtung während 60 Sekunden ausgeschaltet, worauf die Temperatur von 250 °C auf rund 50 °C absinkt. Die Heizvorrichtung wird wiederum eingeschaltet, worauf die Temperatur innerhalb von 30 Sekunden auf 250 °C ansteigt und während 60 Sekunden gehalten wird. Diese Schritte werden widerholt bis fünfmal die Temperatur während 60 Sekunden bei 250 °C gehalten wurde. Der Prozess endet nach dem Abkühlvorgang, d.h. bei ungefähr 50 °C.

In dieser ersten Ausführungsform weist die Temperaturkurve vier lokale Minima respektive vier Tiefpunkte bei einer Temperatur von 50 °C auf. Die Maximale Temperatur sowie die lokalen Maximal liegen jeweils bei einer Temperatur von 250 °C. Der Gesamtzyklus dauert damit rund 12.5 Minuten. In dieser zweiten Ausführungsform ist gegenüber der ersten Ausführungsform eine tiefere maximale Temperatur gewählt, welche jedoch länger gehalten wird. Zudem sind statt 6 Zyklen lediglich 5 Zyklen vorgesehen.

Während in der zweiten Ausführungsform vorzugsweise ein elektrisches Heizelement in der Kammer vorgesehen ist, kann alternativ dazu auch mit anderen Mitteln beheizt werden, welche weniger träge reagieren, zum Beispiel kann mit Heissgas, Mikrowellen oder weitere dem Fachmann bekannte Heizmittel beheizt werden. Der Kühlvorgang kann mit gekühltem Gas oder mit einem Gas bei Raumtemperatur erfolgen. Diese Varianten können auch bei den anderen Ausführungsbeispielen vorgesehen sein.

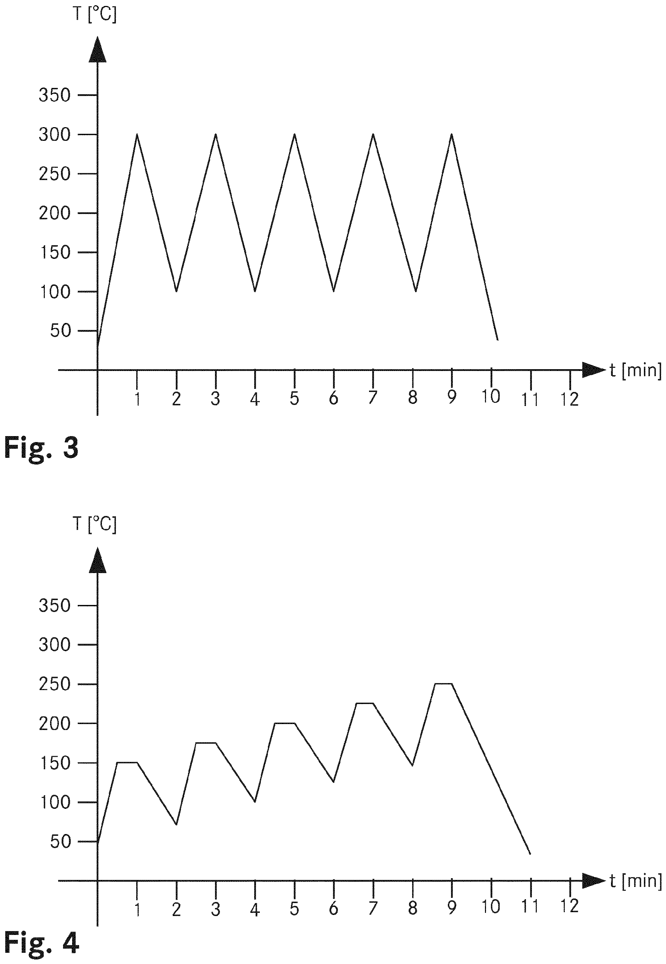

Die Figur 3 zeigt eine dritte Ausführungsform einer Temperaturkurve für das Konditionierungsverfahren eines Adsorbens in einer Kammer. Die Anfangstemperatur beträgt in der Kammer rund 300 °C und bleibt während des Verfahrens konstant. Die Fiber wird in die Kammer eingeführt und während 60 Sekunden auf 300 °C aufgeheizt. Anschliessend wird die Fiber aus der Kammer entnommen und während weiteren 60 Sekunden auf 100 °C abgekühlt. Diese Schritte werden widerholt bis fünfmal die Temperatur von 300 °C erreicht wurde. Der Prozess endet nach dem letzten Abkühlvorgang bei Raumtemperatur.

In dieser dritten Ausführungsform weist die Temperaturkurve vier lokale Minima respektive vier Tiefpunkte bei einer Temperatur von 100 °C auf. Die Maximale Temperatur sowie die lokalen Maximal liegen jeweils bei einer Temperatur von 300 °C. Der Gesamtzyklus dauert damit rund 10 Minuten. In dieser dritten Ausführungsform ist gegenüber der ersten Ausführungsform eine höhere minimale Temperatur gewählt. Die Höchsttemperatur von 300 °C wird nur punktuell erreicht und nicht über längere Zeit gehalten. Im vorliegenden Verfahren sind 5 Zyklen vorgesehen.

Die Figur 4 zeigt eine vierte Ausführungsform einer Temperaturkurve für das Konditionierungsverfahren eines Adsorbens in einer Kammer. Die Anfangstemperatur beträgt in der Kammer rund 150 °C. Die Fiber wird für 60 Sekunden in die Kammer geführt. Anschliessend wird die Fiber in einer Kanüle während 60 Sekunden an der Umgebungsluft auf eine Temperatur von ungefähr 75 °C abgekühlt. Gleichzeitig wird die Temperatur in der Kammer um 25 °C auf 175 °C erhöht. Nach dem Abkühlvorgang wird die Fiber in die Kammer während 60 Sekunden der Temperatur von 175 °C ausgesetzt. Dabei ist die Fiber exponiert, das heisst aus der Kanüle ausgefahren. Anschliessend wird die Fiber in die Kanüle zurückgefahren und an der Umgebungsluft auf eine Temperatur von ungefähr 100 °C abgekühlt, während die Kammer auf eine Temperatur von 200 °C aufgeheizt wird. Diese Schritte werden widerholt bis viermal ein Tiefpunkt respektive ein lokales Minimum erreicht worden ist. Der Prozess endet nach dem letzten Abkühlvorgang schliesslich bei Raumtemperatur.

In dieser vierten Ausführungsform weist die Temperaturkurve vier lokale Minima respektive vier Tiefpunkte auf, welche nacheinander um eine Temperatur von 25 °C zunehmen. Die Temperaturkurve weist somit einen Trend mit positiver Steigung auf. Das Temperaturmaximum wird nach 8 Minuten und 30 Sekunden erreicht und beträgt 250 °C.

Dem Fachmann ist klar, dass die Temperaturkurve beliebig variiert werden kann, ohne die Grundidee der Erfindung zu verlassen. Der in der vierten Ausführungsform gezeigte Trend der Temperaturkurve kann auch anderweitig verlaufen, zum Beispiel mit negativer Steigung. Weiter können die lokalen Minima respektive die lokalen Maxima eigene Funktionen beschreiben, welche von einer Geraden abweichen. Die Minima respektive die Maxima können eine Zickzack-Kurve bildet. Die Minima und die Maxima einer Temperaturkurve müssen nicht parallel verlaufen etc.

Die einzelnen Temperaturverläufe können jeweils durch unterschiedliche Kammerbeheizungen und durch unterschiedliche Kühltechniken erreicht werden. So kann zum Beispiel das zweite Ausführungsbeispiel einer Temperaturkurve auch mit einer zusätzlichen Kühlkammer erreicht werden etc.

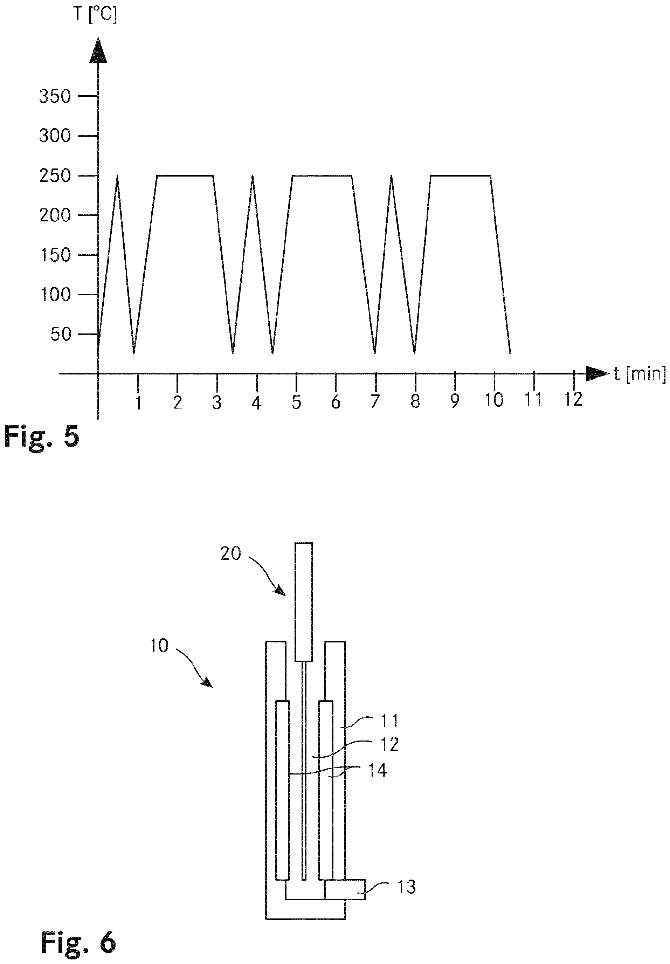

Die Figur 5 zeigt eine fünfte Ausführungsform einer Temperaturkurve für das Konditionierungsverfahren eines Adsorbens in einer Kammer. Die Anfangstemperatur beträgt in der Kammer rund 250 °C und bleibt während des Konditionierverfahrens konstant. Die Fiber wird für 30 Sekunden in die Kammer geführt und auf eine Temperatur von 250 °C aufgeheizt. Anschliessend wird die Fiber in eine separate Kühlkammer überführt und während 30 Sekunden ungefähr auf Raumtemperatur abgekühlt. Danach wird die Fiber wieder in die Kammer überführt, wo sie nun während 120 Sekunden der Temperatur von 250 °C ausgesetzt wird. Anschliessend wird die Fiber in eine separate Kühlkammer überführt und während 30 Sekunden ungefähr auf Raumtemperatur abgekühlt. Daraufhin wird die Fiber wieder in die Kammer überführt, wo sie während 30 Sekunden der Temperatur von 250 °C ausgesetzt wird. Diese Schritte werden widerholt bis fünfmal ein Tiefpunkt respektive ein lokales Minimum erreicht worden ist. Der Prozess endet nach dem letzten Abkühlvorgang schliesslich bei Raumtemperatur.

Die Figur 6 zeigt eine schematische Darstellung einer Ausführungsform einer Kammer 10 mit einer Heizvorrichtung 14, in welcher eine das Phasenmaterial umfassende Fiber 20 angeordnet ist. Die Kammer 10 umfasst ein Gehäuse 11 mit einem Innenraum 12, in welchem eine Heizvorrichtung 15 angeordnet ist. Die Heizvorrichtung 14 ist vorliegend zylindrisch, insbesondere als Heizspirale ausgebildet, in welche die Fiber 20 eingeführt werden kann. Die Heizvorrichtung kann jedoch auch anderweitig ausgebildet sein, zum Beispiel kann die Heizvorrichtung nur an einer Seite im Innenraum 12 oder am Boden des Innenraums 12 angeordnet sein. Die Kammer 10 umfasst weiter einen Fluideinlass 13 im Bodenbereich des Gehäuses 11, womit ein Fluid in den Innenraum 12 geführt werden kann. Das Fluid dient zum Spülen des Innenraums 12 während dem Konditionieren der Fiber. Damit kann vermieden werden, dass sich zwischen dem desorbierten Analyten und der Fiber in dem Innenraum 12 ein Gleichgewicht einstellen kann. Das Fluid kann gasig oder flüssig sein. Besonders bevorzugt handelt es sich um ein reaktionsträges Gas, wie zum Beispiel Stickstoff oder Edelgas. Das Fluid kann zusätzlich oder alternativ zum Spülen des Innenraums auch zur Kühlung der Fiber verwendet werden, womit die Tiefpunkte der Temperaturkurve schneller erreicht werden können. Auch hierbei kann das Fluid gasig oder flüssig sein. Das Fluid kann schliesslich zusätzlich oder alternativ zur Kühlung respektive zum Spülen auch zum Beheizen der Fiber verwendet werden, womit die lokalen Maxima der Temperaturkurve schneller erreicht werden können, wobei das Fluid wiederum gasig oder flüssig sein.

Die Vorrichtung zur Durchführung der Konditionierung kann als separate Kammer zur Ausschliesslichen Nutzung für die Konditionierung vorgesehen sein. Alternativ kann ein beheizbarer Injektor eines Analysengeräts, insbesondere eines Chromatographen als Kammer vorgesehen sein.

Die Vorrichtung kann weiter eine separate Kühlkammer umfassen, wobei während des Verfahrens die Fiber zum Abkühlen in die Kühlkammer überführt werden kann. Die Kühlkammer kann aktiv gekühlt sein oder lediglich mit einem Inertgas bei Raumtemperatur durchströmt sein.

Statt der Kühlkammer oder zusätzlich dazu kann die Vorrichtung auch einen Ventilator umfassen. Der Ventilator kann ausserhalb der Kammer angeordnet sein, so dass die Fiber, insbesondere die sich in der Kanüle befindliche Fiber, zum Abkühlen aus der Kammer hinaus, vor dem Ventilator positioniert und die Fiber durch den Luftstrom direkt oder indirekt abgekühlt werden kann. Mit dem Ventilator kann aber auch ein Kühlgas (aktiv gekühlt oder mit Raumtemperatur) durch die Kammer geströmt werden, um die Fiber zu kühlen. In diesem Fall müsste die Fiber für den Abkühlvorgang nicht aus der Kammer entnommen werden. Weiter kann der Ventilator auch in einer separaten Kühlkammer angeordnet sein, womit ein gekühltes oder ungekühltes Gas, insbesondere ein Inertgas durch die Kühlkammer geströmt werde kann, um die Fiber zu kühlen. Dem Fachmann sind weitere Möglichkeiten bekannt, womit die Fiber effizienter oder einfacher gekühlt werden kann.

Während die Figur 6 eine Vorrichtung zum Konditionieren einer Fiber zeigt, ist dem Fachmann klar, dass mit dem erfindungsgemässen Verfahren ebenso weitere Phasenmaterialien konditioniert werden können. Zum Beispiel kann mit dem Verfahren auch ein Phasenmaterial für SPE konditioniert werden. Weiter können mit dem Verfahren auch HPLC- oder GC-Säulen schonend konditioniert werden. Dem Fachmann sind weitere mögliche Anwendungen des erfindungsgemässen Verfahrens bekannt.

Zusammenfassend ist festzustellen, dass erfindungsgemäss ein besonders schonendes Verfahren zur Durchführung einer Konditionierung respektive einer Aufbereitung eines Phasenmaterials für die chemische Analyse insbesondere für die Konditionierung einer Fiber für die SPME erreicht wird.

## Patentansprüche

1. Verfahren zur Durchführung einer Festphasen-Mikroextraktion, wobei eine Fiber einem Analyten ausgesetzt wird, so dass ein Phasenmaterial (20) der Fiber den Analyten adsorbiert, wobei anschliessend der Analyt von der Fiber in einem Injection Port eines Analysengerätes desorbiert wird und wobei die Fiber danach für die weitere Verwendung konditioniert wird, indem das Phasenmaterial (20) entlang einer Temperaturkurve beheizt wird, **dadurch gekennzeichnet, dass** die Temperaturkurve des Phasenmaterials (20) während der Desorption mindestens einen Tiefpunkt aufweist.

2. Verfahren nach Anspruch 1, **dadurch gekennzeichnet, dass** eine Temperaturdifferenz zwischen einer maximalen Temperatur der Temperaturkurve und des Tiefpunktes der Temperaturkurve zwischen 50 °C und 500 °C, vorzugsweise zwischen 100 °C und 400 °C, insbesondere bevorzugt zwischen 150 °C und 350 °C liegt.

3. Verfahren nach Anspruch 2, **dadurch gekennzeichnet, dass** die maximale Temperatur zwischen 100 °C und 600 °C, vorzugsweise zwischen 150 °C und 400 °C, insbesondere bevorzugt zwischen 200 °C und 300 °C liegt.

4. Verfahren nach Anspruch 2 oder 3, **dadurch gekennzeichnet, dass** der Tiefpunkt zwischen 0 °C und 300 °C, vorzugsweise zwischen 10 °C und 150 °C, insbesondere bevorzugt zwischen 15 °C und 50 °C liegt.

5. Verfahren nach einem der Ansprüche 1 bis 4, **dadurch gekennzeichnet, dass** die Temperaturkurve mehr als einen Tiefpunkt, insbesondere zwischen 2 und 10 Tiefpunkte, vorzugsweise zwischen 4 und 8 Tiefpunkte umfasst.

6. Verfahren nach den Ansprüchen 3 und 5, **dadurch gekennzeichnet, dass** zwischen zwei Tiefpunkten jeweils ein Hochpunkt erreicht wird, welcher grösser als 0.8-mal, vorzugsweise grösser als 0.9-mal die maximale Temperatur ist.

7. Verfahren nach einem der Ansprüche 1 oder 2, **dadurch gekennzeichnet, dass** zwischen zwei zeitlich benachbarten Tiefpunkten eine Zeitspanne zwischen 15 und 600 Sekunden, vorzugsweise zwischen 30 und 300 Sekunden, besonders bevorzugt zwischen 60 und 240 Sekunden liegt.

## Claims

1. A process for carrying out a solid-phase microextraction, wherein a fiber is exposed to an analyte, resulting in adsorption of the latter by the phase material (20) of the fiber, whereby the fiber then undergoes desorption in an injection port of an analyser and wherein the fiber is then conditioned for further use, wherein the phase material (20) is heated along a temperature curve, **characterized in that** the temperature curve of the phase material (20) during desorption includes at least one low point.

2. The process as claimed in claim 1, wherein a temperature difference between a maximum temperature of the temperature curve and the low point of the temperature curve is between 50°C and 500°C, preferably between 100°C and 400°C, especially preferably between 150°C and 350°C.

3. The process as claimed in claim 2, wherein the maximum temperature is between 100°C and 600°C, preferably between 150°C and 400°C, especially preferably between 200°C and 300°C.

4. The process as claimed in claim 2 or 3, wherein the low point is between 0°C and 300°C, preferably between 10°C and 150°C, especially preferably between 15°C and 50°C.

5. The process as claimed in any of claims 1 to 4, wherein the temperature curve includes more than one low point, in particular between 2 and 10 low points, preferably between 4 and 8 low points.

6. The process as claimed in claims 3 and 5, wherein, between two low points, a high point is in each case reached that is greater than 0.8 times, preferably greater than 0.9 times the maximum temperature.

7. The process as claimed in either of claims 1 and 2, wherein a time interval between 15 and 600 seconds, preferably between 30 and 300 seconds, particularly preferably between 60 and 240 seconds is between two low points at neighboring times.

## Revendications

1. Procédé de réalisation d'une microextraction sur phase solide, dans lequel une fibre est exposée à un analyte, de telle sorte qu'un matériau de phase (20) de la fibre adsorbe l'analyte, dans lequel l'analyte est ensuite désorbé de la fibre dans un port d'injection d'un appareil d'analyse et dans lequel la fibre est après conditionnée pour l'utilisation ultérieure, en chauffant le matériau de phase (20) le long d'une courbe de température, **caractérisé en ce que** la courbe de température du matériau de phase (20) présente au moins un point bas pendant la désorption.

2. Procédé selon la revendication 1, **caractérisé en ce qu'**une différence de température entre une température maximale de la courbe de température et le point bas de la courbe de température se situe entre 50 °C et 500°C, de préférence entre 100 °C et 400°C, de manière notamment préférée entre 150 °C et 350°C.

3. Procédé selon la revendication 2, **caractérisé en ce que** la température maximale se situe entre 100 °C et 600°C, de préférence entre 150 °C et 400°C, de manière notamment préférée entre 200 °C et 300°C.

4. Procédé selon la revendication 2 ou 3, **caractérisé en ce que** le point bas se situe entre 0 °C et 300°C, de préférence entre 10 °C et 150°C, de manière notamment préférée entre 15 °C et 50 °C.

5. Procédé selon l'une quelconque des revendications 1 à 4, **caractérisé en ce que** la courbe de température comprend plus d'un point bas, notamment entre 2 et 10 points bas, de préférence entre 4 et 8 points bas.

6. Procédé selon les revendications 3 et 5, **caractérisé en ce qu'**entre deux points bas, un point haut est atteint à chaque fois, qui est supérieur à 0,8 fois, de préférence supérieur à 0,9 fois la température maximale.

7. Procédé selon l'une quelconque des revendications 1 ou 2, **caractérisé en ce qu'**une période de temps d'entre 15 et 600 secondes, de préférence d'entre 30 et 300 secondes, de manière particulièrement préférée d'entre 60 et 240 secondes est située entre deux points bas voisins dans le temps.
